# EUROPEAN PATENT APPLICATION

(11) **EP 3 187 892 A1**
(43) Date of publication of application: **05.07.2017**
(21) Application number: 15460139.7
(22) Date of filing: 29.12.2015
(51) Int. Cl.: G01S 1/04

(54) **RADIO SIGNAL TRANSMITTER**

(71) Applicant: Infini Systems Sp. z o.o., 40-203 Katowice (PL)
(72) Inventor: Bargiel, Jacek, 41-203 Sosnowiec (PL)

(57) **Abstract**

The subject of the invention is the radio signal transmitter, a *Beacon* type electronic device, which using radio waves can contact with mobile devices such as smartphones, tablets or laptops, in order to establish location of the given mobile device or the transmitter itself.

According to the invention the radio signal transmitter, being a *Beacon* type device, consisting of power supply, especially in the form of battery, electronic circuit (1) with Bluetooth chip, a emitting radio signal (3) antenna connected to that circuit and placed directly on the board (4) of the electronic PCB circuit or outside of it, characterized in that, it is additionally equipped with a parabolic or reflector antenna (5), placed nearby the transmitting antenna (2), allowing the parabolic or reflector antenna (5) to direct the radio signal (3) transmitted by transmitting antenna (2) as well as increasing radio signal (3) in the desired zones (6) or decreasing it in the forbidden zones (7).

## Description

The subject of the invention is a radio signal transmitter which being a *Beacon* type electronic device, can use radio waves to contact mobile devices, such as smartphones, tablets or laptops, in order to establish location of the mobile device or the transmitter itself. The solution also enables data exchange between the mobile device and the transmitter in order to pass information regarding objects or events to the user, using the transmitter to describe such information. The basic advantages of this type of devices are little power consumption, which prolongs their lifespan even up to two years on one battery, their small size and their minor production costs.

Known prior art *Beacon* type radio signal transmitters emit radio signal using antennas placed directly on the board of electronic circuit such as PCB *(Printed Circuit Board)* or using external antennas.

These types of antennas are standard accessory of known *Beacon* type transmitters and other transmitting devices used as so called lighthouses. These devices are based on wireless short-range communication between different electronic devices such as keyboards, computers, laptops, palmtops, mobile phones and many others - usually using Bluetooth, especially Bluetooth Low Energy. Such a device consists of a Bluetooth chip, battery and the antenna (the transmitter), which emits and sends a certain radio signal, received by compatible mobile devices within the range. The presently used *Beacon* type transmitters emit only omni-directional signal using the abovementioned antennas designed to conform to the Bluetooth standard.

The inventor was aiming to create a design, which apart from standard omni-directional signal antenna, would also include additional construction elements - unknown in these types of devices - what would improve stability of the transmitted signal and allow the signal to be directed more easily.

The *Beacon* type radio signal transmitter according the invention contains a power supply, especially in the form of battery, an electronic circuit with a Bluetooth chip, an antenna emitting radio signal, connected to that circuit and placed directly on the board of the electronic PCB circuit or outside of it, characterized in that, it is additionally equipped with a parabolic or reflector antenna, placed nearby the transmitting antenna, allowing the parabolic or reflector antenna to direct the radio signal transmitted by the transmitting antenna as well as increasing radio signal in the desired zones or decreasing it in the forbidden zones.

A well-known and commonly applied method of using parabolic or reflector antennas to steer the direction of radio waves emission have never been used before to control the radio signal in *Beacon* type radio signal transmitters.

The use of additional parabolic or reflector antenna in the device according to the invention allows for much better management of the radio signal emition, ensures better stability of the transmitted signal, increases the control of its direction and allows achieving a better quality of the signal in desired zones. The device enables stronger or weaker emission of radio signal into chosen zones, which was not possible with prior art devices without parabolic or reflector antennas. The invention ensures a good control over the propagation of waves in the created tele-transmitting environment, which contains impediments absorbing radio waves and elements reflecting radio signal.

The use of properly formed parabolic or reflector antennas in the transmitter in accordance to the invention directs and strengthens radio waves, allowing for an easier design of a stable environment containing Bluetooth standard radio signals.

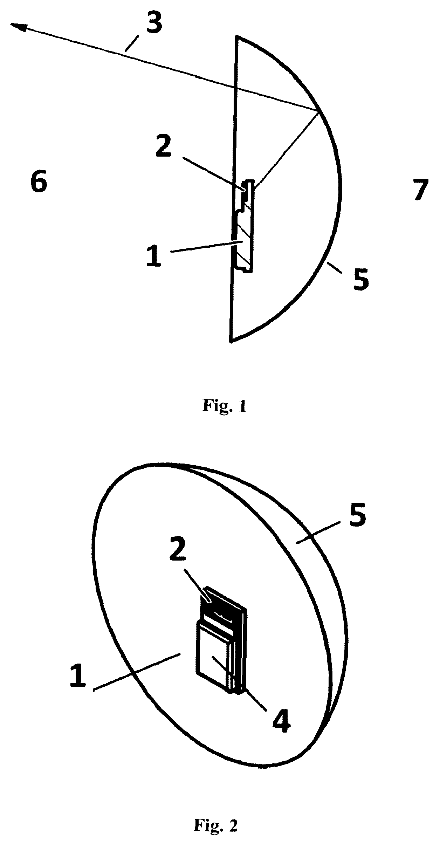

The radio transmitter which is the subject of the invention has been described more precisely in the example and presented in the figures below. Fig. 1 shows the side view of the radio signal transmitter with a parabolic antenna, and fig. 2 shows the front-perspective view of the radio signal transmitter with a parabolic antenna.

### Example

The example of radio signal transmitter according to the invention, presented in fig. 1 and fig. 2 consists of electronic circuit **1** with Bluetooth chip powered by battery, connected to transmitting antenna **2** emitting radio signal **3,** placed directly on the electronic circuit board **4** being the PCB circuit, moreover equipped with parabolic antenna **5** allowing directing radio signal **3** towards zone **6.** Thanks to this solution, signal in zone **6** is increased according to demands, while signal in the forbidden zone 7 is simultaneously decreased. Controlling the power as well as distribution of power in the desired zone **6** is acquired by adjusting proper shape of the bowl of the parabolic antenna **5** and by means of adjusting proper position of transmitting antenna **2** emitting radio signal **3** with regards to focal points of parabolic antenna **5.**

## Claims

1. Radio signal transmitter, being a *Beacon* type device, consisting of power supply, especially in the form of battery, electronic circuit with Bluetooth chip, a emitting radio signal antenna connected to that circuit and placed directly on the board of the electronic PCB circuit or outside of it, **characterized in that,** it is additionally equipped with a parabolic or reflector antenna (5), placed nearby the transmitting antenna (2), allowing the parabolic or reflector antenna (5) to direct the radio signal (3) transmitted by transmitting antenna (2) as well as increasing radio signal (3) in the desired zones (6) or decreasing it in the forbidden zones (7).
